# FASCICULE DE BREVET EUROPEEN

(11) **EP 3 356 702 B1**
(45) Date de publication et mention de la délivrance du brevet: **06.11.2019**
(21) Numéro de dépôt: 16785207.8
(22) Date de dépôt: 22.09.2016
(51) Int. Cl.: F16H 57/023

(54) **DISPOSITIF DE MONTAGE D'UNE COURONNE D'UN TRAIN EPICYCLOIDAL**
VORRICHTUNG ZUR MONTAGE EINES ZAHNKRANZ EINES PLANETENRADGETRIEBES
DEVICE FOR MOUNTING A RING GEAR OF AN EPICYCLIC GEAR TRAIN

(30) Priorité: 30.09.2015 FR 1559272
(43) Date de publication de la demande: 08.08.2018
(73) Titulaire: Safran Transmission Systems, 92700 Colombes (FR)
(72) Inventeur: PELTIER, Jordane, 75011 Paris (FR); DOMBEK, Alexis, 95420 Genainville (FR); GOUDAR, Jamal, 95100 Argenteuil (FR)
(74) Mandataire: Cabinet Camus Lebkiri
(86) Numéro de dépôt international: PCT/FR2016/052404
(87) Numéro de publication internationale: WO 2017/055713

(56) Documents cités:
- WO-A1-2013/124590
- CN-A- 104 373 517
- US-B1- 8 939 714

## Description

### DOMAINE TECHNIQUE DE L'INVENTION

L'invention se rapporte à un dispositif de montage d'une couronne d'un train épicycloïdal, et plus particulièrement d'un train épicycloïdal à dentures chevrons.

### ETAT DE LA TECHNIQUE ANTERIEURE

Un train épicycloïdal est un système permettant de transmettre de la puissance sur un arbre mécanique. Dans le cas d'un train épicycloïdal pour turbomachine, la ligne d'entrée provient du moteur de la turbomachine. Le but d'un train épicycloïdal est de réduire la vitesse de rotation du moteur tout en transmettant le couple. Dans ce cas-là, les vitesses et couples sont très élevées, et des réducteurs épicycloïdaux de forte puissance sont nécessaires. Dans une turbomachine, des trains épicycloïdaux sont notamment utilisés en tant que réducteur de vitesse pour réduire la vitesse de rotation du rotor de la soufflante, indépendamment de la vitesse de rotation de la turbine.

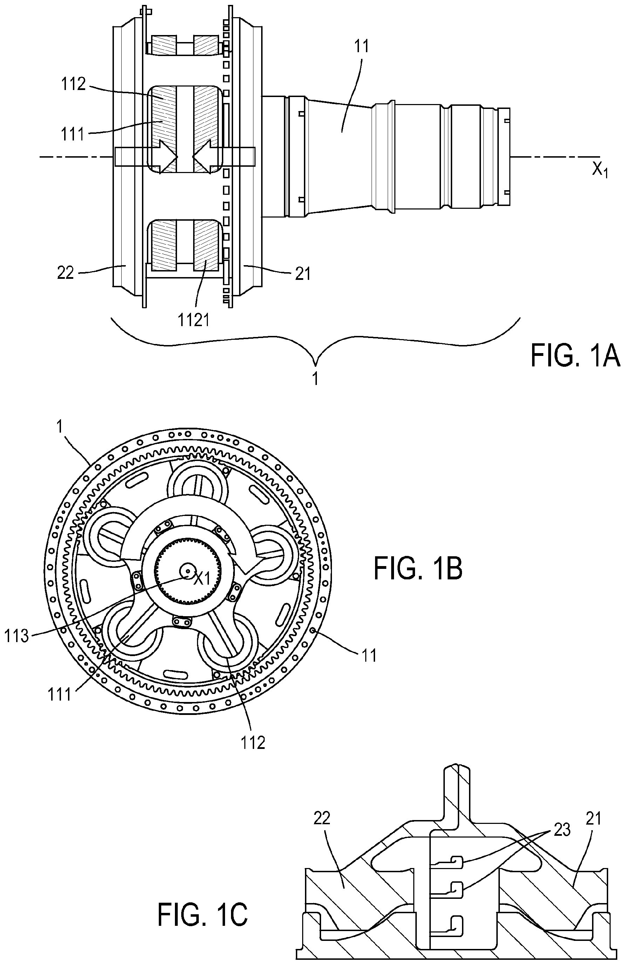

Tel qu'illustré aux figures 1A et 1B, un réducteur à train épicycloïdal 1 comporte un outil porte satellites 11. Le porte-satellites comporte plusieurs emplacements 111 d'un premier type pour les satellites 112, qui sont les pignons autour du réducteur. Au centre du réducteur se trouve un deuxième type d'emplacement 113 pour un pignon central dit le solaire.

Les satellites de ce type de train comportent des dentures 1121 chevrons, c'est-à-dire une denture qui a un angle par rapport à l'axe de rotation du satellite. Ce type de denture permet d'égaliser les charges axiales. Du fait de la présence de dentures chevron, il est nécessaire pour le montage qu'un des éléments d'engrènement du train soit en deux parties.

Le réducteur 1 comporte ainsi une couronne composée d'une première demi-couronne, dite couronne avant 21, et d'une deuxième demi-couronne, dite couronne arrière 22. La couronne avant et la couronne arrière comportent des dents 23 sur leur périphérie permettant de les solidariser l'une par rapport à l'autre lorsqu'elles sont en contact et d'ainsi former la couronne du réducteur. Pour ce qui est de l'assemblage de la couronne avant et de la couronne arrière de façon à former la couronne, un centrage fretté est effectué dont le résultat est visible à la figure 1C. Y sont visibles la couronne avant 21 et la couronne arrière 22 comportant des dents, l'ensemble étant fretté. A cette fin, il convient de faire tourner la couronne avant et la couronne arrière autour de leur axe de rotation respectif, sachant que chacune pèse au moins une quinzaine de kilos ; et de les avancer axialement l'une par rapport à l'autre afin de les engager dans les satellites, de les fretter et de les orienter angulairement l'une par rapport à l'autre jusqu'au contact final entre les dents.

WO2013/124590 divulgue un dispositif de récupération de l'huile d'un réducteur de turboréacteur qui est compatible d'un réducteur à pignons mobiles et à couronne extérieure fixe. A cet effet, un réducteur à train épicycloïdal comporte un pignon planétaire mobile en rotation autour d'un axe de rotation, des pignons satellites entraînés par ledit pignon planétaire et mobiles en rotation autour d'axes de satellites portés par un porte satellite, lesdits pignons satellites roulant sur une couronne fixe et ledit porte-satellites étant positionné axialement latéralement par rapport à ladite couronne, l'engrenage formé par les pignons des satellites et la couronne étant conformé pour éjecter axialement son huile de lubrification après usage, où le porte-satellites comporte une portion de surface positionnée en vis-à-vis dudit engrenage et formant moyen de guidage et de déflexion de ladite huile, de sa direction axiale vers la direction radiale, pour une éjection par centrifugation à son extrémité.

### EXPOSE DE L'INVENTION

L'invention vise à remédier à tout ou partie des inconvénients de l'état de la technique identifiés ci-dessus, et notamment à proposer des moyens pour permettre de manipuler et maintenir facilement les éléments constituant une couronne d'un réducteur à train épicycloïdal en vue de son montage.

Dans ce dessein, un aspect de l'invention se rapporte à un dispositif de montage d'une couronne d'un train épicycloïdal, ledit train épicycloïdal s'étendant selon un premier axe, ladite couronne comportant une couronne avant et une couronne arrière, ledit dispositif comportant :
- une pluralité de guides longitudinaux, chaque guide s'étendant selon une direction parallèle au premier axe ;
- un support avant en forme de portion de cercle pour la couronne avant, ledit support avant comportant :
   - au moins deux trous pour le passage des guides ;
   - une pluralité de premiers moyens de maintien et de rotation par rapport à son axe de la couronne avant, lesdits premiers moyens de maintien et de rotation étant mobiles entre une première position dans laquelle la couronne avant est maintenue et peut tourner par rapport à son axe et une deuxième position dans laquelle la couronne avant n'est pas maintenue ;
- un support arrière en forme de portion de cercle pour la couronne arrière, ledit support arrière comportant :
   - au moins deux trous pour le passage des guides ;
   - une pluralité de deuxièmes moyens de maintien et de rotation par rapport à son axe de la couronne arrière, lesdits deuxièmes moyens de maintien étant mobiles entre une troisième position dans laquelle la couronne arrière est maintenue et peut tourner par rapport à son axe et une quatrième position dans laquelle la couronne arrière n'est pas maintenue.

Ainsi le dispositif de montage selon l'invention permet de faciliter l'assemblage des couronnes avant et arrière et leur montage avec les satellites d'un porte-satellites. En effet, les couronnes peuvent être soutenues grâce aux guides, et aux supports avant et arrière. Elles peuvent translater le long des guides grâce aux trous dans les supports avant et arrière. Et elles sont maintenues grâce aux premiers et deuxièmes moyens de maintien et de rotation qui permettent également aux couronnes de tourner facilement autour de leurs axes respectifs. Ce dispositif de montage permet ainsi de faciliter la manipulation et le montage d'une couronne d'un train épicycloïdal pour un opérateur.

Outre les caractéristiques principales qui viennent d'être mentionnées dans le paragraphe précédent, le procédé/dispositif selon l'invention peut présenter une ou plusieurs caractéristiques complémentaires parmi les suivantes, considérées individuellement ou selon les combinaisons techniquement possibles.

De façon avantageuse, la pluralité de premiers moyens de maintiens comporte :
- deux galets réglables, lesdits galets réglables comportant une tige de fixation du galet au support avant, ladite tige ayant une longueur réglable et une broche à billes permettant de faire passer lesdits galets réglables de la première position à la deuxième position ; et
- deux galets simples, lesdits galets simples comportant un ressort et une broche à billes permettant de faire passer lesdits galets simples de la première position à la deuxième position, lesdits ressorts étant adaptés pour plaquer le galet contre la couronne avant dans la première position.

De façon avantageuse, la pluralité de deuxièmes moyens de maintiens comporte :
- deux galets réglables, lesdits galets réglables comportant une tige de fixation du galet au support arrière, ladite tige ayant une longueur réglable et une broche à billes permettant de faire passer lesdits galets réglables de la troisième position à la quatrième position ;
- un galet simple, ledit galet simple comportant un ressort et une broche à billes permettant de faire passer ledit galet simple de la troisième position à la deuxième position, ledit ressorts étant adapté pour plaquer le galet contre la couronne arrière dans la troisième position ; et
- une rainure et une patte de fixation, ladite pate de fixation comportant une première extrémité adaptée pour coopérer avec la rainure, ladite première extrémité étant mobile dans la rainure et une deuxième extrémité adaptée pour coopérer avec la couronne arrière de façon à maintenir la couronne arrière.

De façon avantageuse, au moins deux guides de la pluralité de guides comportent chacun :
- un manchon comportant une première extrémité et une deuxième extrémité ;
- une première portion de guide, une troisième extrémité de la première portion étant adaptée pour s'insérer dans la première extrémité du manchon ;
- une deuxième portion de guide, une quatrième extrémité de la deuxième portion étant adaptée pour s'insérer dans la deuxième extrémité du manchon ;
chacun des manchons étant relié à l'autre manchon au moyen d'un élément de support, ledit élément de support comportant un pied adapté pour être en appui sur une surface.

De façon avantageuse, le dispositif comporte une broche d'orientation, ladite broche comportant un tube longitudinal adaptée pour s'insérer à la fois au travers d'un premier trou de la couronne avant et d'un deuxième trou de la couronne arrière.

### BREVE DESCRIPTION DES FIGURES

D'autres caractéristiques et avantages de l'invention ressortiront à la lecture de la description qui suit, en référence aux figures annexées, qui illustrent :
- la figures 1A une vue schématique d'un train épicycloïdal ;
- la figure 1B, une vue de face du train de la figure 1 ;
- la figure 1C, une vue en coupe d'une couronne avant et d'une couronne arrière du train de la figure 1 ;
- la figure 2, une vue schématique d'un berceau de montage d'un train épicycloïdal et d'un dispositif de montage d'une couronne d'un train selon un mode de réalisation de l'invention ;
- les figures 3A, 3B, 4A et 4B, des vues schématiques de moyens de maintien et de rotation d'un dispositif de montage d'une couronne d'un train selon un mode de réalisation de l'invention ;
- la figure 5, une vue schématique d'une couronne arrière et d'un support arrière d'un dispositif de montage d'une couronne d'un train selon un mode de réalisation de l'invention ;
- la figure 6, une vue schématique d'une couronne avant et d'un support avant d'un dispositif de montage d'une couronne d'un train selon un mode de réalisation de l'invention ;
- la figure 7A, une vue schématique d'une broche d'orientation d'un dispositif de montage d'une couronne d'un train selon un mode de réalisation de l'invention ;
- la figure 7B, une vue schématique d'une couronne avant, d'une couronne arrière et de la broche d'orientation de la figure 7A ;
- les figures 8A et 8B, des vues schématiques d'un dispositif de montage d'une couronne d'un train selon un mode de réalisation de l'invention dans différentes positions.

Pour plus de clarté, les éléments identiques ou similaires sont repérés par des signes de référence identiques sur l'ensemble des figures.

### DESCRIPTION DETAILLEE D'UN MODE DE REALISATION

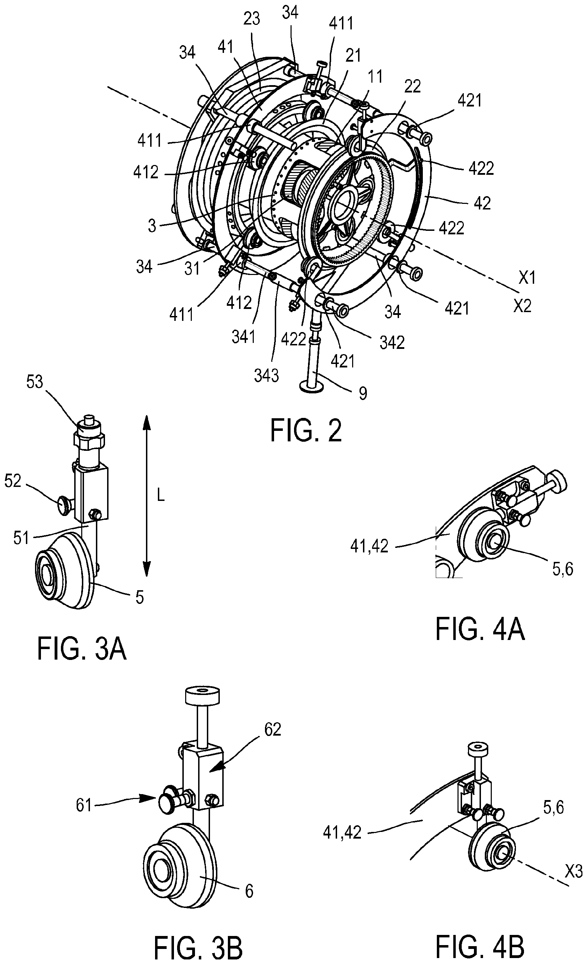

La figure 2 illustre un train épicycloïdal s'étendant selon un premier axe X1 en place dans un dispositif de montage d'un train épicycloïdal. Ce dispositif de montage d'un train épicycloïdal comporte un berceau de montage 3 comportant une portion creuse 31 s'étendant selon un deuxième axe X2. La portion creuse 31 reçoit une première partie d'un porte-satellites 11 d'un train épicycloïdal. Le porte-satellites s'étend selon un premier axe X1 confondu avec le deuxième axe X2 sur la figure 2.

Sur la figure 2, est représenté également le berceau de montage 3 sur lequel le porte-couronnes 23, la couronne avant 21 et la couronne arrière 22 ont été installés. Dans le cas d'un montage d'un train épicycloïdal, l'assemblage de la couronne composée des couronnes avant 21 et couronne arrière 22 se fait à la fin du montage du train, une fois que les satellites et le planétaire ont été insérés dans l'élément porte-satellites. Le porte-couronne et la couronne avant doivent de préférence être positionnés sur le berceau avant le début du montage des autres éléments du train épicycloïdal et notamment avant l'insertion du porte-satellites dans la portion creuse du berceau de montage. En effet, une fois le porte-satellites inséré dans la portion creuse, le diamètre de la partie du porte-satellites destinée à l'insertion des satellites est trop élevé par rapport à celui du porte-couronnes et des couronnes. Ainsi, une fois le porte-satellites inséré dans le berceau, il n'est plus possible d'insérer le porte-couronnes et la couronne avant par la partie-haute du train. Les insérer par la partie basse du train nécessiterait de faire ressortir du dispositif de montage les éléments déjà montés, à savoir satellites dans le porte-satellites ce qui est lourd et dangereux pour un opérateur. Il est donc particulièrement avantageux que le dispositif de montage prévoir de pouvoir positionner le porte-couronnes et la couronne avant préalablement à l'insertion des éléments porte-satellites et satellites.

Le berceau de montage 3 du train épicycloïdal coopère avec le dispositif de montage d'une couronne du train épicycloïdal pour effectuer l'assemblage des différents éléments constituant le train épicycloïdal. Il est ainsi visible sur la figure 2 que le berceau de montage 3 comporte ici quatre guides 34 longitudinaux qui s'étendent chacun selon une direction parallèle au premier axe X1 selon lequel s'étend le train épicycloïdal. Les quatre guides 34 sont positionnés en périphérie du berceau de montage.

Le dispositif de montage de la couronne du train épicycloïdal comporte un support avant 41. Le support avant 41 comporte quatre trous 411 (dont un non visible) qui permettent aux guides 34 de les traverser. Ainsi, le support avant 41 peut translater le long des guides 34. Le support avant 41 a une forme en portion de cercle mais n'est pas complètement circulaire de préférence. En effet, l'espace laissé permet à un opérateur d'accéder plus facilement aux éléments, notamment à la couronne avant, que si le support avant 41 était complètement circulaire. Le support avant 41 comporte quatre premiers moyens 412 de maintien et de rotation de la couronne avant par rapport à son axe qui est confondu avec le premier axe X1. Les premiers moyens 412 de maintien et de rotation comportent dans cet exemple de réalisation des galets qui seront décrits plus en détail en référence aux figures suivantes.

Le dispositif de montage de la couronne du train épicycloïdal comporte un support arrière 42. Le support arrière 42 comporte trois trous 421 qui permettent aux guides 34 de traverser. Ainsi, le support arrière 42 peut translater également le long des guides 34. Le support arrière 42 a une forme en portion de cercle mais n'est pas complètement circulaire de préférence. En effet, l'espace laissé permet à un opérateur d'accéder plus facilement aux éléments, notamment à la couronne arrière, que si le support arrière 42 était complètement circulaire. Le support arrière 42 comporte quatre deuxième moyens 422 de maintien et de rotation de la couronne arrière par rapport à son axe qui est confondu avec le premier axe X1. Les deuxièmes moyens 422 de maintien et de rotation comportent dans cet exemple de réalisation des galets et une rainure et une patte de fixation qui seront décrits plus en détail en référence aux figures suivantes.

Les supports avant et arrière ont pour fonction de rigidifier le dispositif entre les guides et de faciliter la translation des couronnes le long des guides en s'assurant que les galets se déplacent et qu'un galet ne reste pas à une position différente de celle des autres galets.

Les supports avant et arrière, et donc les couronnes avant et arrière sont supportés par les guides présents sur le berceau de montage. Plusieurs guides du dispositif comportent une première portion de guide 341, une deuxième portion de guide 342 et un manchon. Une troisième extrémité de la première portion de guide peut s'insérer dans une première extrémité du manchon, et une quatrième extrémité de la deuxième portion de guide peut s'insérer dans une deuxième extrémité du manchon. Il est visible sur la figure 2 que deux manchons 343 du dispositif sont reliés l'un à l'autre au moyen d'un élément de support 9. Cet élément de support 9 comporte un pied pouvant être en appui sur une surface afin d'éviter que les guides 34 ne fléchissent à cause du poids de l'outillage du train épicycloïdal et notamment des couronnes avant et arrière. L'élément de support 9 peut se positionner au sol, est réglable et permet à un opérateur de reprendre les efforts afin d'éviter le fléchissement de l'ensemble, et en outre de maintenir l'alignement entre les couronnes, les dentures et le porte-satellites.

La figure 3A illustre un galet réglable 5 pouvant faire office de premier 412 ou deuxième 422 moyen de maintien de rotation par rapport à son axe de la couronne avant ou arrière. Le galet réglable comporte une tige de fixation 51 du galet au support avant, ou arrière. La tige de fixation 51 a une longueur L réglable, la longueur de la tige du galet réglable étant réglable grâce à la vis moletée 53 qui se trouve sur la tige de fixation 51. Le galet réglable comporte également une broche à billes 52 permettant de faire passer le galet de la première/troisième position, illustrée à la figure 4B, à la deuxième/quatrième position, illustrée à la figure 4A. Les galets réglables ont une longueur réglable afin de régler la position de la couronne avant/arrière par rapport à l'axe du porte-satellites.

La figure 3B illustre un galet simple 6 pouvant faire office de premier 412 ou deuxième 422 moyen de maintien de rotation par rapport à son axe de la couronne avant ou arrière. Le galet simple 6 comporte une broche à billes 61 permettant de faire passer le galet de la première/troisième position, illustrée à la figure 4B, à la deuxième/quatrième position, illustrée à la figure 4A. Le galet simple 6 comporte également un ressort 62 permettant de plaquer le galet simple sur la couronne avant/arrière.

Dans la deuxième/quatrième position illustrée à la figure 4A, les galets réglables/simples sont escamotés par rapport au support 41, 42 avant/arrière. Ainsi, la couronne avant/arrière n'est pas maintenue en position par les galets escamotés.

Dans la première/troisième position illustrée à la figure 4B, les galets réglables/simples ne sont pas escamotés par rapport au support avant/arrière 41, 42. Ainsi, la couronne avant/arrière est soutenue et donc maintenue en position par les galets non escamotés. En outre, les galets sont mobiles en rotation autour d'un troisième axe X3. Ainsi en position non escamotés, les galets soutiennent la couronne avant/arrière et cette dernière peut tourner autour de son axe grâce à la rotation des galets autour de leur propre axe.

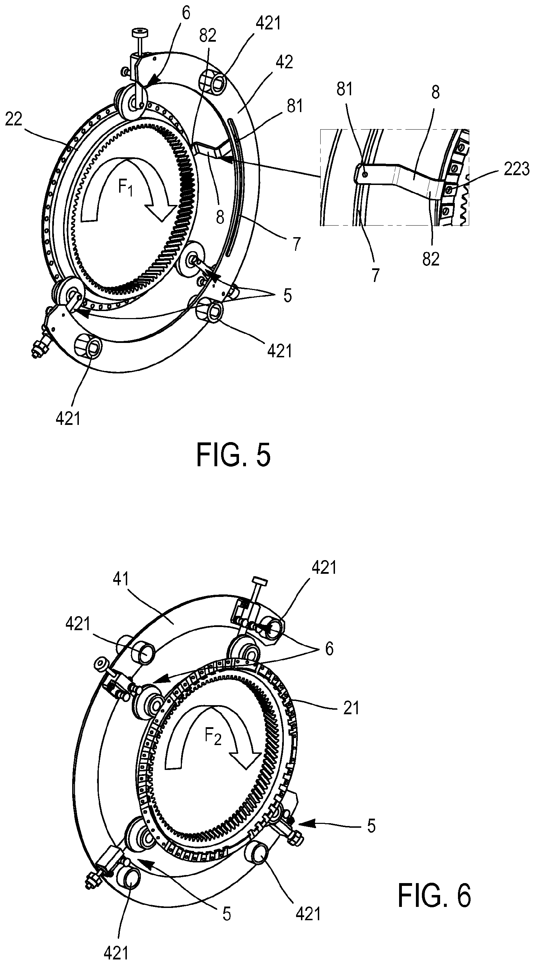

La figure 5 illustre la couronne arrière 22 sur son support arrière 42. Le support arrière 42 comporte, dans cet exemple de réalisation trois trous 421 pour le passage de guides, permettant de faire translater le support arrière 42 et donc la couronne arrière le long desdits guides. Le support arrière comporte également plusieurs deuxièmes moyens de maintien et de rotation de la couronne arrière par rapport à son axe selon la flèche F1. Les deuxièmes moyens comportent deux galets réglables 5, un galet simple 6, et une rainure 7 et une patte de fixation 8. Le fonctionnement et la structure des galets réglables et simple a été décrit en référence aux figures 3A à 4B. La patte de fixation 8 et la rainure 7 ont pour fonction de sécuriser la position de la couronne arrière. En effet, même si les galets sont usinés à la taille et au profil des couronnes, il pourrait toujours exister un risque que la couronne ne saute des galets lors de la manipulation des éléments. La patte de fixation 8 comporte une première extrémité 81 qui coopère avec la rainure 7 et une deuxième extrémité 82 qui coopère avec la couronne arrière de façon à maintenir cette dernière. Ainsi la première extrémité 81 de la patte 8 s'insère dans la rainure 7 et la deuxième extrémité 82 peut être vissée à un trou de vis 223 de la couronne arrière 22. La rainure 7 a également pour fonction de libérer la rotation de la couronne arrière par rapport à son axe selon la flèche F1. Avec seulement la présence d'une patte de fixation, mais sans rainure, la rotation de la couronne arrière ne serait pas libre.

La figure 6 illustre la couronne avant 21 sur son support avant 41. Le support avant 41 comporte, dans cet exemple de réalisation quatre trous 421 pour le passage de guides, permettant de faire translater le support avant 41 et donc la couronne avant le long desdits guides. Le support avant comporte également plusieurs premiers moyens de maintien et de rotation de la couronne avant par rapport à son axe selon la flèche F2. Les premiers moyens comportent deux galets réglables 5 et deux galets simples 6. Le fonctionnement et la structure des galets réglables et simples a été décrit en référence aux figures 3A à 4B. La couronne avant 21 étant bridée par quatre galets, il n'est pas nécessaire pour sécuriser sa fixation d'ajouter une rainure et une patte de fixation.

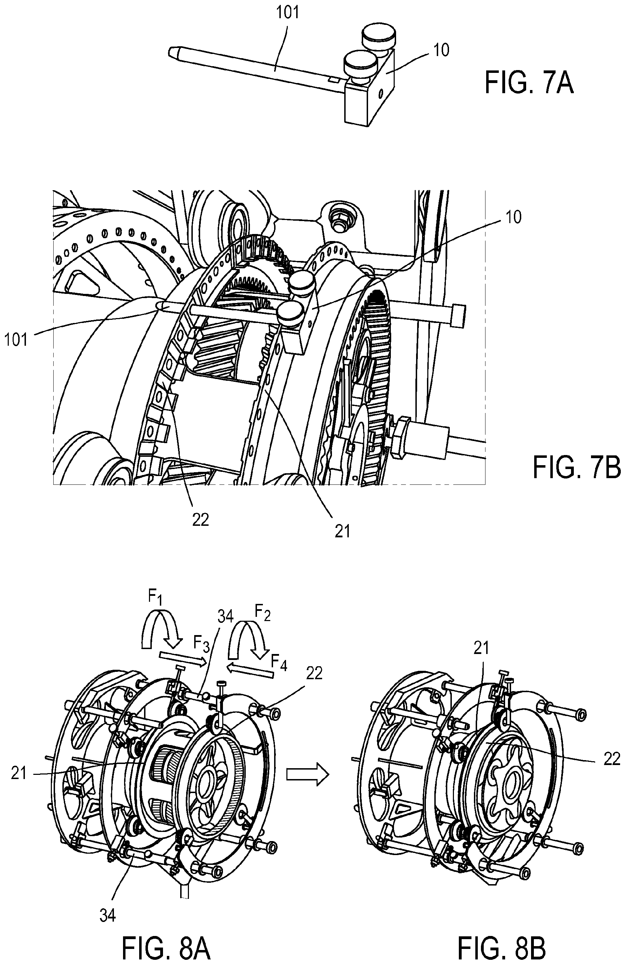

La figure 7A illustre une broche d'orientation 10 comportant un tube longitudinal 101. Le tube 101 de la broche d'orientation est adapté pour traverser, tel que représenté à la figure 7B, des trous de vis de chacune des couronnes avant 21 et arrière 22. Afin de pouvoir rendre les dentures de chacune des couronnes solidaires les unes des autres, et des satellites, les couronnes avant et arrière comportent une marque sur leur périphérie, la marque de la couronne avant devant être en regard de la marque de la couronne arrière. En insérant la broche d'orientation, on permet à un opérateur de rapprocher les couronnes l'une de l'autre en étant sûr du bon positionnement. Une fois la broche d'orientation 10 insérée dans le trou adéquat de chacune des couronnes avant et arrière, l'opérateur n'au plus qu'à faire tourner une des deux couronnes avant ou arrière, les trous étant indexés l'un par rapport à l'autre au moyen de la broche 9. Ainsi, l'opérateur pourra faire tourner une seule couronne, ce qui entrainera la deuxième également en rotation.

La figure 8A illustre la façon dont la couronne du train épicycloïdal est montée par translation et rotation des couronnes avant 21 et arrière 22.

Il convient de faire translater les couronnes avant 21 et arrière 22 l'une vers l'autre et vers les dentures des satellites du porte-satellites selon les flèches F3 et F4. La couronne avant 21 translate le long des guides 34 selon la flèche F3 et la couronne arrière 22 translate le long des guides 34 selon la flèche F4. Il faut s'assurer, qu'une fois qu'on arrive au quasi contact entre les dentures des couronnes avant et arrière, les trous des vis tombent les uns en face des autres, et notamment ceux permettant l'orientation. La broche d'orientation présentée aux figures 7A et 7B est alors utilisée. En effet, sur les 360° des couronnes avant et arrière, une seule position est possible permettant de fretter les dentures. Une fois la broche d'orientation insérée entre les trous d'orientation des couronnes avant 21 et arrière 22, l'opérateur n'a plus qu'à faire tourner selon la flèche F1 la couronne avant, ou selon la flèche F2 la couronne arrière de façon à fretter les dentures les unes par rapport aux autres et engager la couronne ainsi formée avec les satellites tel que représenté à la figure 8B.

L'invention n'est pas limitée aux modes de réalisation précédemment décrits en référence aux figures et des variantes pourraient être envisagées sans sortir du cadre de l'invention.

## Revendications

1. Dispositif de montage d'une couronne d'un train épicycloïdal (1), ledit train épicycloïdal s'étendant selon un premier axe (X1), ladite couronne comportant une couronne avant (21) et une couronne arrière (22), ledit dispositif comportant :
- une pluralité de guides (34) longitudinaux, chaque guide s'étendant selon une direction parallèle au premier axe ;
**caractérisé en ce que** le dispositif de montage comporte
- un support avant (41) en forme de portion de cercle pour la couronne avant, ledit support avant comportant :
- au moins deux trous (34) pour le passage des guides ;
- une pluralité de premiers moyens (412) de maintien et de rotation par rapport à son axe de la couronne avant, lesdits premiers moyens de maintien et de rotation étant mobiles entre une première position dans laquelle la couronne avant est maintenue et peut tourner par rapport à son axe et une deuxième position dans laquelle la couronne avant n'est pas maintenue ;
- un support arrière (42) en forme de portion de cercle pour la couronne arrière, ledit support arrière comportant :
- au moins deux trous (421) pour le passage des guides ;
- une pluralité de deuxièmes moyens (422) de maintien et de rotation par rapport à son axe de la couronne arrière, lesdits deuxièmes moyens de maintien étant mobiles entre une troisième position dans laquelle la couronne arrière est maintenue et peut tourner par rapport à son axe et une quatrième position dans laquelle la couronne arrière n'est pas maintenue.

2. Dispositif selon la revendication précédente **caractérisé en ce que** la pluralité de premiers moyens de maintiens comporte :
- deux galets réglables (5), lesdits galets réglables comportant une tige (51) de fixation du galet au support avant, ladite tige ayant une longueur (L) réglable et une broche à billes (52) permettant de faire passer lesdits galets réglables de la première position à la deuxième position ; et
- deux galets simples (6), lesdits galets simples comportant un ressort 62) et une broche à billes (61) permettant de faire passer lesdits galets simples de la première position à la deuxième position, lesdits ressorts étant adaptés pour plaquer le galet contre la couronne avant dans la première position.

3. Dispositif selon l'une quelconque des revendications précédentes **caractérisé en ce que** la pluralité de deuxièmes moyens de maintiens comporte :
- deux galets réglables, lesdits galets réglables comportant une tige de fixation du galet au support arrière, ladite tige ayant une longueur réglable et une broche à billes permettant de faire passer lesdits galets réglables de la troisième position à la quatrième position ;
- un galet simple, ledit galet simple comportant un ressort et une broche à billes permettant de faire passer ledit galet simple de la troisième position à la deuxième position, ledit ressorts étant adapté pour plaquer le galet contre la couronne arrière dans la troisième position ; et
- une rainure (7) et une patte de fixation (8), ladite pate de fixation comportant une première extrémité adaptée pour coopérer avec la rainure, ladite première extrémité étant mobile dans la rainure et une deuxième extrémité adaptée pour coopérer avec la couronne arrière de façon à maintenir la couronne arrière.

4. Dispositif selon l'une quelconque des revendications précédentes **caractérisé en ce que** au moins deux guides de la pluralité de guides comportent chacun :
- un manchon (343) comportant une première extrémité et une deuxième extrémité ;
- une première portion (341) de guide, une troisième extrémité de la première portion étant adaptée pour s'insérer dans la première extrémité du manchon ;
- une deuxième portion (342) de guide, une quatrième extrémité de la deuxième portion étant adaptée pour s'insérer dans la deuxième extrémité du manchon ;
chacun des manchons étant relié à l'autre manchon au moyen d'un élément de support, ledit élément de support comportant un pied adapté pour être en appui sur une surface.

5. Dispositif selon l'une quelconque des revendications précédentes **caractérisé en ce qu'**il comporte une broche (10) d'orientation, ladite broche comportant un tube longitudinal (101) adapté pour s'insérer à la fois au travers d'un premier trou de la couronne avant et d'un deuxième trou de la couronne arrière.

## Patentansprüche

1. Montagevorrichtung einer Krone eines Planetengetriebes (1), wobei das genannte Planetengetriebe sich gemäß einer ersten Achse (X1) erstreckt, wobei die genannte Krone eine vordere Krone (21) und eine hintere Krone (22) umfasst, wobei die genannte Vorrichtung umfasst:
- eine Vielzahl von länglichen Führungen (34), wobei jede Führung sich gemäß einer zur ersten Achse parallelen Richtung erstreckt;
**dadurch gekennzeichnet, dass** die Montagevorrichtung umfasst:
- einen vorderen Träger (41) in Form eines Kreisabschnitts für die vordere Krone, wobei der genannte vordere Träger umfasst:
∘ wenigstens zwei Löcher (34) für den Durchgang der Führungen;
∘ eine Vielzahl von ersten Halte- und Rotationsmitteln (412) im Verhältnis zu seiner Achse der vorderen Krone, wobei die genannten ersten Halte- und Rotationsmittel zwischen einer ersten Position, in der die vordere Krone gehalten ist und sich und im Verhältnis zu seiner Achse drehen kann, und einer zweiten Position, in der die vordere Krone nicht gehalten ist, mobil sind;
- einen hinteren Träger (42) in Form eines Kreisabschnitts für die hintere Krone, wobei der hintere Träger umfasst:
∘ wenigstens zwei Löcher (421) für den Durchgang der Führungen;
∘ eine Vielzahl von zweiten Halte- und Rotationsmitteln (422) im Verhältnis zu seiner Achse der hinteren Krone, wobei die genannten zweiten Haltemittel zwischen einer dritten Position, in der die hintere Krone gehalten ist und sich im Verhältnis zu ihrer Achse drehen kann, und einer vierten Position, in der die hintere Krone nicht gehalten ist, mobil sind.

2. Vorrichtung gemäß dem voranstehenden Anspruch, **dadurch gekennzeichnet, dass** die Vielzahl von ersten Haltemitteln umfasst:
- zwei einstellbare Rollen (5), wobei die genannten einstellbaren Rollen einen Befestigungsstift (51) der Rolle am vorderen Träger umfassen, wobei der genannte Stift eine einstellbare Länge (L) und einen Kugelstift (52) umfasst, der den Durchgang der genannten einstellbaren Rollen der ersten Position in die zweite Position erlaubt; und
- zwei einfache Rollen (6), wobei die genannten einfachen Rollen eine Feder (62) und einen Kugelstift (61) umfassen, der den Durchgang der genannten einfachen Rollen von der ersten Position in die zweite Position erlaubt, wobei die genannten Federn geeignet sind, um die Rolle gegen die vordere Krone in der ersten Position zu drücken.

3. Vorrichtung gemäß irgendeinem der voranstehenden Ansprüche, **dadurch gekennzeichnet, dass** die Vielzahl von zweiten Haltemitteln umfasst:
- zwei einstellbare Rollen, wobei die genannten einstellbaren Rollen einen Befestigungsstift der Rolle am hinteren Träger umfassen, wobei der genannte Stift eine einstellbare Länge und einen Kugelstift umfasst, der den Durchgang der genannten einstellbaren Rollen von der dritten Position in die vierte Position erlaubt;
- eine einfache Rolle, wobei die genannte einfache Rolle eine Feder und einen Kugelstift umfasst, der den Durchgang der genannten einfachen Rolle von der dritten Position in die zweite Position erlaubt, wobei die genannten Federn geeignet sind, um die Rolle gegen die hintere Krone in der dritten Position zu drücken; und
- eine Nut (7) und eine Befestigungsklaue (8), wobei die genannte Befestigungsklaue ein erstes Ende umfasst, das geeignet ist, um mit der Nut zusammenzuwirken, wobei das genannte erste Ende in der Nut mobil ist und das zweite Ende geeignet ist, um mit der hinteren Krone derart zusammenzuwirken, dass die hintere Krone gehalten ist.

4. Vorrichtung gemäß irgendeinem der voranstehenden Ansprüche, **dadurch gekennzeichnet, dass** wenigstens zwei Rollen der Vielzahl von Führungen jeweils umfassen:
- einen Stutzen (343), der ein erstes Ende und ein zweites Ende umfasst;
- einen ersten Führungsabschnitt (341), wobei ein drittes Ende des ersten Abschnitts geeignet ist, um in das erste Ende des Stutzens eingeführt zu sein;
- einen zweiten Führungsabschnitt (342), wobei ein viertes Ende des zweiten Abschnitts geeignet ist, um in das zweite Ende des Stutzens eingeführt zu sein;
- wobei jeder der Stutzen an dem anderen Stutzen mittels eines Trägerelements verbunden ist, wobei das genannte Trägerelement einen Fuß umfasst, der geeignet ist, um auf einer Fläche aufstützend zu sein.

5. Vorrichtung gemäß irgendeinem der voranstehenden Ansprüche, **dadurch gekennzeichnet, dass** sie einen Ausrichtungsdorn (10) umfasst, wobei der genannte Dorn eine längliche Röhre (101) umfasst, die geeignet ist, um gleichzeitig durch ein erstes Loch der vorderen Krone und ein zweites Loch der hinteren Krone eingeführt zu sein.

## Claims

1. Device for installing a ring of a planetary gear train (1), the said planetary gear train extending in a first axis (X1), the said ring including a front ring (21) and a rear ring (22), the said device containing:
- a plurality of longitudinal guides (34), each guide extending in a direction parallel to the first axis;
**characterised in that** the device comprises:
- a front bracket (41) having the shape of an arc of a circle for the front ring, the said front bracket containing:
- at least two holes (34) allowing the guides to pass through;
- a plurality of first means (412) of holding the front ring and of rotating with respect to its axis, where the said first holding and rotation means can move between a first position in which the front ring is held, and can rotate around its axis, and a second position in which the front ring is not held in place;
- a rear bracket (42) having the shape of an arc of a circle for the rear ring, the said rear bracket containing:
- at least two holes (421) allowing the guides to pass through;
- a plurality of second means (422) of holding the rear ring and of rotating with respect to its axis, where the said second holding means can move between a third position in which the rear ring is held, and can rotate around its axis, and a fourth position in which the rear ring is not held in place.

2. Device according to the previous claim **characterised by** the fact that the plurality of first holding means contain:
- two adjustable rollers (5), where the said adjustable rollers contain a pin (51) to attach the roller to the front bracket, where the length (L) of the said pin is adjustable and where a ball lock pin (52) enables the said adjustable rollers to be moved from the first position to the second position; and
- two simple rollers (6), where the said simple rollers contain a spring (62) and a ball lock pin (61) enabling the said simple rollers to move from the first position to the second position, where the said springs are designed to press the roller against the front ring in the first position.

3. Device according to any of the previous claims, **characterised in that** the plurality of second holding means include:
- two adjustable rollers, where the said adjustable rollers contain a pin to attach the roller to the rear bracket, where the length of the said pin is adjustable and where a ball lock pin enables the said adjustable rollers to be moved from the third position to the fourth position;
- a simple roller, where the said simple roller has a spring and a ball lock pin enabling the said simple roller to be moved from the third position to the second position, and where the said spring is designed to press the roller against the rear ring in the third position; and
- a groove (7) and a retaining bracket (8), where the said retaining bracket contains a first end designed to work in tandem with the groove, where the said first end can move in the groove, and a second end designed to work in tandem with the rear ring to hold the rear ring in place.

4. Device according to any of the previous claims, **characterised by** the fact that at least two of the plurality of guides each includes:
- a sleeve tube (343) including a first end and a second end;
- a first guide portion (341), where a third end of the first portion is designed to be inserted in the first end of the sleeve tube;
- a second guide portion (342), where a fourth end of the second portion is designed to be inserted in the second end of the sleeve tube;
each sleeve tube being connected to the other sleeve tube by means of a support element, the said support element containing a stand designed to rest on a surface.

5. Device according to any of the previous claims, **characterised by** the fact that it contains a guide pin (10), the said pin containing a longitudinal tube (101) designed to be inserted simultaneously through a first hole of the front ring and a second hole of the rear ring.
